# DEMANDE DE BREVET EUROPEEN

(11) **EP 1 731 694 A2**
(43) Date de publication de la demande: **13.12.2006**
(21) Numéro de dépôt: 06290850.4
(22) Date de dépôt: 24.05.2006
(51) Int. Cl.: E04H 3/16, A01G 9/24

(54) **Abri du genre tunnel, notamment pour la protection de piscine ou de culture végétale**

(30) Priorité: 08.06.2005 FR 0505806
(71) Demandeur: Borner, Jacques, F-18100 Vierzon (FR)
(72) Inventeur: Borner, Jacques, F-18100 Vierzon (FR)
(74) Mandataire: Laget, Jean-Loup

(57) **Abrégé**

L'invention concerne un abri (1) du genre tunnel, notamment pour la protection de piscine ou de culture végétale, du type composé d'une ossature rigide constituée d'arceaux (2) aptes à supporter des éléments de couverture fixes ou mobiles (4, 5) se présentant sous forme de panneaux.

Cet abri (1) est caractérisé en ce qu'au moins l'un (5) des éléments de couverture, dit élément de couverture ouvrant, est déplaçable angulairement par rapport aux arceaux (2) entre une position ouverte et une position fermée.

## Description

La présente invention concerne un abri du genre tunnel, notamment pour la protection de piscine ou de culture végétale, du type composé d'une ossature rigide constituée d'arceaux aptes à supporter des éléments de couverture, fixes ou mobiles, se présentant sous forme de panneaux.

La délimitation d'un périmètre de sécurité autour de piscines pour rendre plus difficile l'accès desdites piscines aux jeunes enfants en l'absence des parents a amené à un développement de structures fermées d'abri de type tunnel. Ces abris sont jusqu'à présent soit formés exclusivement d'éléments de couverture fixes, soit formés d'éléments de couverture fixes et mobiles, les panneaux mobiles délimitant les flancs du tunnel. Ces panneaux mobiles sont généralement réalisés sous forme de panneaux coulissants dans une feuillure pratiquée dans les arceaux de la structure. Ces panneaux s'étendent depuis le pied desdits arceaux en direction du faîtage du tunnel. Ces panneaux présentent un poids important rendant difficile leur manutention. En outre, en position ouverte desdits panneaux, l'eau de pluie peut librement pénétrer à l'intérieur dudit abri. Enfin, lors d'une surpression à l'intérieur de l'abri, liée par exemple à l'ouverture d'une porte de l'abri et à l'entrée brutale de vent à l'intérieur dudit abri, les éléments de couverture peuvent être endommagés, notamment par explosion.

Dans le domaine des serres, il est également connu des abris munis de panneaux mobiles solidaires en déplacement, en vue de permettre l'aération de l'abri. Une telle solution est décrite dans le brevet FR-2.660.151. Dans ce cas, l'ouverture ou respectivement la fermeture d'un ouvrant entraîne l'ouverture ou respectivement la fermeture des autres ouvrants. Il en résulte une architecture particulièrement complexe.

De même, dans le brevet allemand DE-1.270.985, il est présenté un abri de culture équipé de panneaux ouvrants disposés entre deux montants. Cette succession de panneaux ouvrants est commandée en synchronisme et oblige à disposer pour chaque panneau d'une construction extrêmement rigide à résistance mécanique élevée. A nouveau, il en résulte une complexité de l'ensemble.

Un but de la présente invention est donc de proposer un abri dont la conception simplifiée permet d'une part une aération dudit abri sans risque d'entrée d'eau à l'intérieur dudit abri, y compris à l'état ouvert dudit abri, d'autre part d'éviter tout risque d'explosion des éléments de couverture de l'abri lors d'une surpression accidentelle à l'intérieur de l'abri liée par exemple à l'entrée importante et brutale d'air dans l'abri par une porte d'entrée de l'abri restée ouverte.

A cet effet, l'invention a pour objet un abri du genre tunnel, notamment pour la protection de piscine ou de culture végétale, du type composé d'une ossature rigide constituée d'arceaux aptes à supporter des éléments de couverture fixes ou mobiles se présentant sous forme de panneaux, caractérisé en ce qu'au moins l'un des éléments de couverture, dit élément de couverture ouvrant, est déplaçable angulairement par rapport aux arceaux entre une position ouverte et une position fermée.

La réalisation d'élément de couverture ouvrant non plus sous forme d'élément de couverture coulissant mais sous forme d'élément déplaçable angulairement permet de supprimer les inconvénients de l'état de la technique en empêchant notamment toute entrée d'eau à l'intérieur de l'abri, y compris en position ouverte dudit élément d'ouvrant et en autorisant, si nécessaire, une ouverture automatique dudit panneau lors d'une surpression à l'intérieur de l'abri.

L'invention sera bien comprise à la lecture de la description suivante d'exemples de réalisation, en référence aux dessins annexés dans lesquels :
la figure 1 représente une vue partielle en perspective d'un abri du genre tunnel conforme à l'invention ;
la figure 2 représente une vue partielle en perspective d'un autre mode de réalisation d'un abri du genre tunnel conforme à l'invention ;
la figure 3 représente une vue partielle en coupe du tunnel de la figure 1;

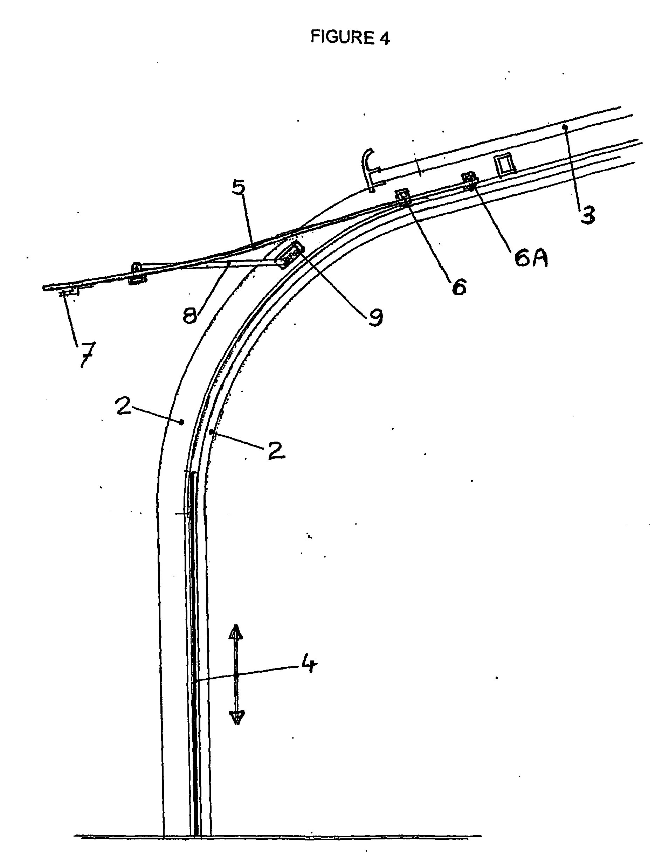

la figure 4 représente une vue partielle en coupe du tunnel de la figure 3 en position ouverte de l'élément de couverture ouvrant et

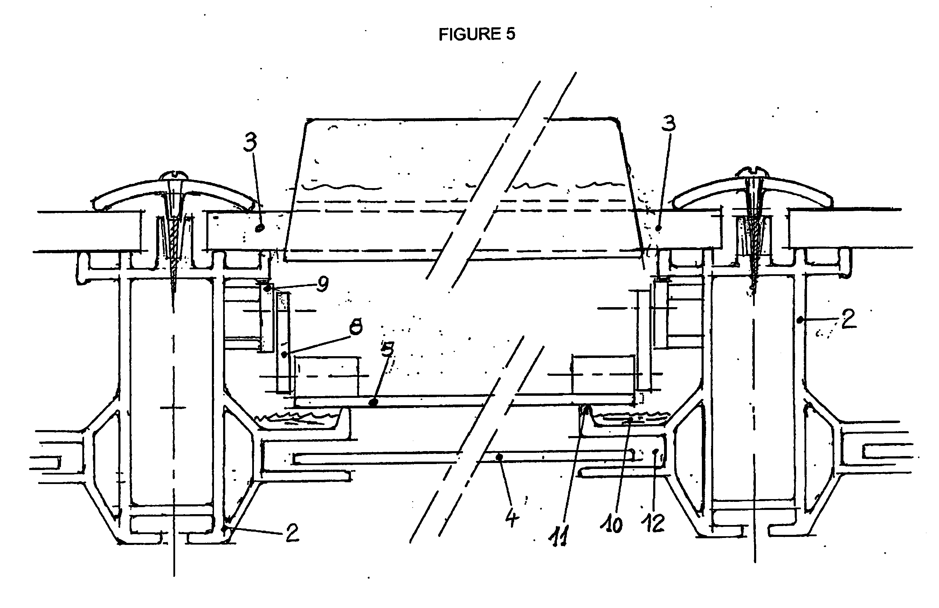

la figure 5 représente une vue partielle en coupe longitudinale de l'abri dans sa zone s'étendant entre deux arceaux.

Comme mentionné ci-dessus, l'abri 1, objet de l'invention, est plus particulièrement destiné à la protection de piscine, de culture végétale ou autre. Cet abri peut encore être appelé couverture en fonction de sa hauteur. Cet abri 1 affecte la forme générale d'un tunnel et est composé d'une ossature rigide, elle-même formée d'arceaux 2, lesdits arceaux supportant par paire des éléments de couverture fixes 3, 13 ou mobiles 4, 5 se présentant sous forme de panneaux.

De manière caractéristique à l'invention, au moins l'un des éléments 3, 13, 4, 5 de couverture, dit élément de couverture ouvrant et représenté en 5 aux figures, est déplaçable angulairement par rapport aux arceaux 2 entre une position ouverte et une position fermée. Au cours de son passage de la position fermée à la position ouverte, l'élément 5 de couverture ouvrant se déplace angulairement en direction de l'extérieur de l'abri.

Dans l'abri 1 représenté, les arceaux sont disposés à intervalle les uns des autres, l'espace laissé libre entre deux arceaux étant rempli par des éléments de couverture. Ces éléments de couverture sont constitués d'éléments de couverture de faîte, destinés à former la toiture dudit abri et représentés en 3 aux figures, d'éléments de couverture bas, dits élément latéraux, représentés en 4 ou 13 aux figures, et à mi-chemin entre l'élément 3 de couverture de faîte et l'élément 4, 13 de couverture bas, positionné sur un flanc du tunnel, l'élément 5 de couverture ouvrant par déplacement angulaire. En conséquence, à chaque fois, entre deux arceaux, la surface de couverture est formée au moins depuis la base des arceaux en direction du sommet des arceaux, d'un élément 4, 13 de couverture bas, d'un élément 5 de couverture ouvrant et d'au moins un élément 3 de couverture de faîte généralement fixe.

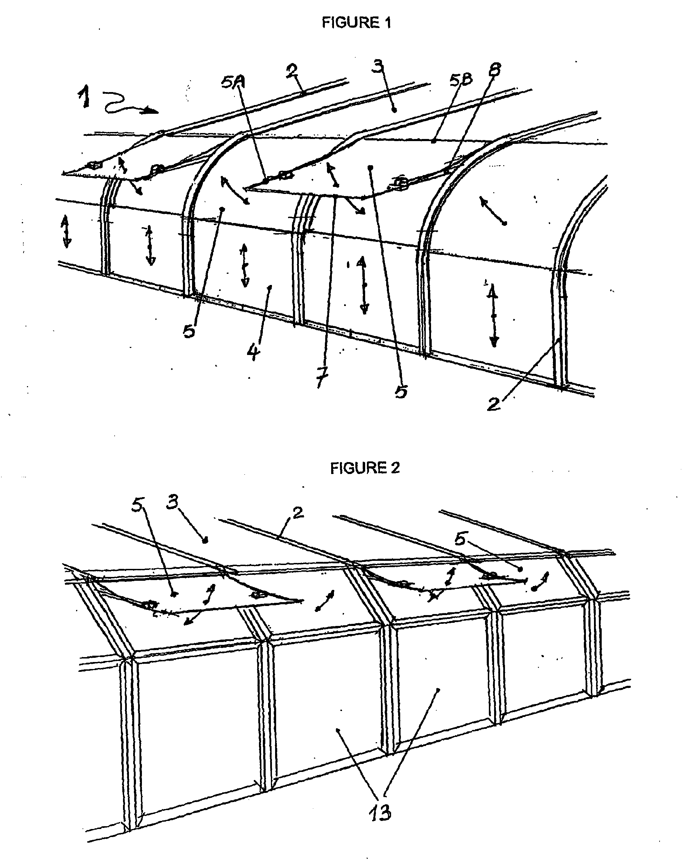

Les éléments 4, 13 de couverture bas peuvent être réalisés soit sous forme d'éléments fixes, comme l'illustre la figure 2, et sont dans ce cas représentés par la référence numérique 13, soit sous forme d'éléments de panneaux coulissants, comme illustré à la figure 1. Dans ce second cas, ils sont représentés par la référence numérique 4. L'élément 5 de couverture ouvrant déplaçable angulairement vient donc par sa base ou bord inférieur, représenté en 7 aux figures, se positionner au niveau du sommet de l'élément 4, 13 de couverture bas tandis qu'il est contigu par son bord transversal supérieur, représenté en 5B aux figures, à l'élément 3 de couverture de faîte. Les bords longitudinaux de l'élément 5 de couverture déplaçable angulairement sont quant à eux représentés en 5A aux figures et viennent en appui sur les arceaux 2. Tel que représenté, l'élément 5 de couverture ouvrant déplaçable angulairement se présente sous forme d'un panneau, en particulier un quadrilatère, dont l'un des bords est relié par une liaison appropriée aux arceaux 2 pour autoriser un déplacement angulaire dudit panneau formant élément de couverture ouvrant entre une position fermée dans laquelle ledit panneau est positionné, en appui sur les arceaux 2, et sensiblement dans le prolongement des panneaux constitutifs de l'élément de couverture de faîte et de l'élément de couverture bas. Ce panneau est déplaçable angulairement depuis cette position fermée vers une position ouverte dans laquelle il forme avec ladite structure d'arceaux un angle et s'étend sensiblement dans le prolongement de l'élément de couverture de faîte. Dans cette position ouverte dans laquelle il s'étend au moins partiellement au-delà de la structure d'arceaux, il forme un panneau de type auvent.

Dans les exemples représentés, il est prévu une pluralité d'éléments 5 de couverture ouvrant disposés alignés le long des flancs dudit tunnel. Ces éléments 5 de couverture ouvrants peuvent être tous ouverts ou ouverts de manière sélective en fonction de l'aération souhaitée.

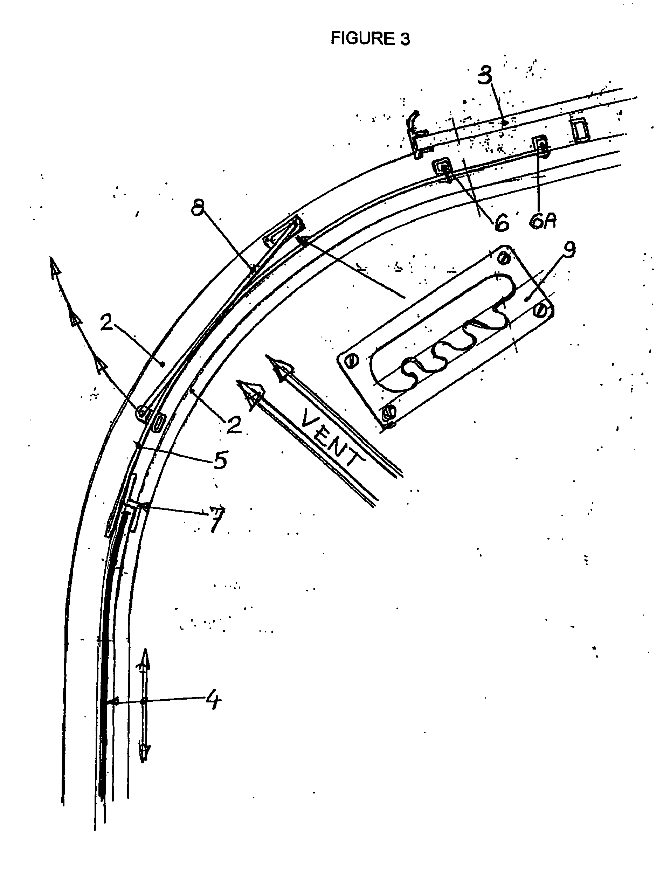

De manière également caractéristique à l'invention, l'élément 5 de couverture ouvrant, qui est de préférence un élément transparent ou translucide, se présente sous forme d'un panneau déformable. Le panneau constitutif de l'élément 5 de couverture ouvrant se déforme au voisinage de sa zone de liaison avec les arceaux 2 pour permettre le déplacement angulaire dans le sens de l'ouverture ou de la fermeture. Ainsi, comme l'illustre la figure 3, cet élément 5 de couverture ouvrant peut être raccordé aux arceaux 2 par au moins une traverse 6 formant axe d'articulation stationnaire dudit élément. Au cours de son entraînement manuel en déplacement, ledit panneau est déformé autour de ladite traverse pour passer d'une position fermée à une position ouverte. La réalisation d'un élément de couverture ouvrant sous forme d'un panneau déformable permet de simplifier l'architecture de l'ensemble. Une liaison complexe entre le panneau et le reste de la structure n'est plus nécessaire. De même, ce panneau peut être exempt d'un cadre ou de montants latéraux contrairement à l'état de la technique où il est nécessaire de tenir, à l'aide d'un encadrement, ledit panneau. Le fait d'exempter ledit panneau d'un encadrement total facilite également sa déformation.

Dans les exemples représentés, il est prévu deux traverses parallèles, représentées en 6 et 6A aux figures, pour renforcer la résistance mécanique de l'ensemble et faciliter un amorçage du rayon de courbure du panneau constitutif de l'élément 5 de couverture ouvrant. Des traverses supplémentaires permettent également de maintenir écarté l'élément 3 de couverture de faîte de la structure d'arceaux 2 autorisant ainsi une circulation d'air sous ledit élément 3 pour limiter la présence de buée. Une ouverture en liaison avec l'extérieur peut être ménagée dans le faîte de l'abri. Cette ouverture, qui permet une aération naturelle, coopère avec les lames d'air ménagées entre les éléments 3 de couverture et les traverses liant les arceaux entre eux. L'air lèche ainsi la face interne de l'abri pour réduire sinon supprimer la formation de condensation.

Dans la zone de transition entre élément 3 de couverture de faîte et élément 5 de couverture ouvrant, l'élément 3 de couverture de faîte est positionné au-dessus de l'élément de couverture ouvrant pour éviter toute infiltration d'eau. L'élément de couverture ouvrant vient lui-même à sa base à recouvrement partiel de l'élément de couverture bas, dit élément latéral, dans la zone de transition desdits éléments, pour assurer une étanchéité dudit abri. Ce montage à recouvrement est plus particulièrement visible à la figure 3. Chaque élément 5 de couverture ouvrant présente en outre, à sa base, une rive 7 d'emboîtement sur le bord d'un élément de couverture contigu pour obtenir une immobilisation dudit élément 5 en position de fermeture. Cette rive 7 est désemboîtable du bord de l'élément 4, 13 de couverture contigu par déformation volontaire de l'élément 5 de couverture ouvrant, lors des phases manuelles d'ouverture et de fermeture, ou accidentelle sous l'effet d'une surpression à l'intérieur dudit abri 1.

Comme cela a d'ores et déjà été mentionné ci-dessus, la base de l'élément 5 de couverture est constituée par le bord 7 de l'élément 5 de couverture destiné à jouxter le bord transversal supérieur de l'élément de couverture bas, dit élément latéral. Il correspond donc au bord de l'élément 5 de couverture ouvrant qui est maintenu libre en position ouverte dudit élément 5 de couverture ouvrant. Ce bord est ainsi formé, dans l'exemple représenté, par une gorge dont les rives sont susceptibles d'enserrer le bord transversal supérieur de l'élément de couverture bas en position fermée de l'élément 5 de couverture ouvrant. Ainsi, lorsqu'une surpression se produit à l'intérieur de l'abri 1, le panneau de l'élément 5 de couverture ouvrant, qui est un panneau déformable, tend à se bomber avec une paroi concave tournée vers l'intérieur de l'abri, cette déformation dudit panneau permettant le désemboîtement de la rive 7 du panneau du bord transversal supérieur de l'élément 13, 4 de couverture bas et par suite un déplacement angulaire de l'élément 5 de couverture ouvrant dans le sens de l'ouverture dudit abri. L'air peut ainsi s'échapper à travers l'ouverture formée réduisant les risques d'explosion des éléments de couverture en cas de surpression à l'intérieur de l'abri.

II est encore prévu, entre arceau 2 et élément 5 de couverture ouvrant, un moyen 8, 9 d'immobilisation dudit élément 5 dans une position angulaire prédéterminée. Ce moyen d'immobilisation peut être constitué par une béquille 8 reliée, par une liaison pivot à l'élément 5 de couverture ouvrant et terminée, à son autre extrémité, par un crochet destiné à venir s'insérer à l'intérieur de crans d'une crémaillère 9 solidaire d'un arceau. Ainsi, lors du déplacement angulaire de l'élément 5 de couverture ouvrant, l'extrémité en forme de crochet de la béquille passe d'un cran à un autre de la crémaillère jusqu'au degré d'ouverture souhaité par l'utilisateur. Cet ensemble béquille/crémaillère aurait pu, de manière équivalente, être remplacé par un vérin à gaz, par un compas à genouillère ou par tout autre moyen d'immobilisation équivalent.

En vue d'éviter une pénétration de l'eau à l'intérieur de l'abri, les arceaux 2 sont équipés, sur leurs flancs, d'au moins une gouttière 10 de récupération des eaux. Chaque gouttière 10 présente une rive 11 d'appui d'un bord 5A longitudinal de l'élément 5 de couverture ouvrant. Ces arceaux peuvent comporter, sur au moins une de leurs faces, un habillage ajouré permettant l'intégration et la protection de sources lumineuses animées ou non. Ces arceaux 2 sont en outre équipés, si nécessaire, d'au moins un rail 12 de guidage de l'élément 4 de couverture bas en cas de réalisation de l'abri à l'aide d'éléments 4 de couverture bas coulissants. Les dimensions transversales de l'élément 5 de couverture ouvrant sont donc choisies pour fermer l'espace laissé libre entre deux arceaux et permettre un positionnement des bords longitudinaux 5A du panneau constitutif de l'élément 5 de couverture à l'aplomb des gouttières 10 de récupération des eaux ménagées au niveau des parois en regard desdits arceaux.

Il doit également être noté que la liaison entre élément 5 de couverture ouvrant et arceau, qui est ici réalisée à l'aide d'une traverse 6 pour permettre un déplacement angulaire de l'élément 5 de couverture ouvrant entre une position fermée et une position ouverte et inversement, pourrait être remplacée de manière équivalente par une liaison articulée de type liaison pivot, charnière ou autre. La mise en oeuvre d'une traverse est préférée en raison de sa simplicité.

Le fonctionnement d'un tel abri est le suivant. En position fermée des éléments 5 de couverture ouvrant, la base dudit élément 5 de couverture est, avec sa rive 7 d'emboîtement, maintenue en position fermée par logement du bord supérieur transversal de l'élément 4, 13 de couverture bas à l'intérieur de la rainure ou gorge ménagée par la rive 7 d'emboîtement.

Pour permettre l'ouverture de l'élément 5 de couverture ouvrant, on procède manuellement à une déformation dudit panneau permettant le désemboîtement de la rive 7 d'emboîtement du bord transversal de l'élément inférieur contigu, puis on entraîne en déplacement ledit panneau vers le haut, ce panneau se déformant autour de ladite traverse jusqu'à la position d'ouverture souhaitée. Au cours de cet entraînement en déplacement, le bord libre de la béquille est amené à passer d'un cran à un autre de la crémaillère pour permettre, lors du relâchement dudit panneau, l'immobilisation du panneau dans la position souhaitée par coopération de l'extrémité libre de la béquille avec un cran de crémaillère.

Pour permettre la fermeture de l'élément 5 de couverture ouvrant, on procède de manière inverse en libérant l'extrémité en forme de crochet de la béquille du cran dans laquelle elle est logée, en l'amenant au cran souhaité et en redéformant le panneau 5 pour contraindre la rive d'emboîtement dudit panneau à venir coiffer le bord transversal de l'élément de couverture bas contigu.

Il est à noter que par convention, on appelle ici bords transversaux des bords qui s'étendent perpendiculairement au plan des arceaux et par bords longitudinaux des bords qui s'étendent sensiblement parallèlement auxdits arceaux. Les bords 5A longitudinaux de l'élément 5 de couverture ouvrant sont donc les bords du panneau qui viennent prendre appui sur lesdits arceaux tandis que les bords transversaux de ce dernier sont constitués d'une part au niveau du bord transversal intérieur par la rive 7 d'emboîtement dudit panneau sur le bord transversal supérieur de l'élément de couverture bas et pour le bord transversal supérieur, par le bord 5B de l'élément 5 de couverture destiné à coopérer avec la traverse servant de liaison du panneau aux arceaux en vue d'autoriser un déplacement angulaire de ce dernier.

## Revendications

1. Abri (1) du genre tunnel, notamment pour la protection de piscine ou de culture végétale, du type composé d'une ossature rigide constituée d'arceaux (2) aptes à supporter des éléments de couverture fixes (3, 13) ou mobiles (4, 5) se présentant sous forme de panneaux,
**caractérisé en ce qu'**au moins l'un (5) des éléments (3, 13, 4, 5) de couverture, dit élément de couverture ouvrant, est déplaçable angulairement par rapport aux arceaux (2) entre une position ouverte et une position fermée.

2. Abri (1) selon la revendication 1,
**caractérisé en ce que** chaque élément (5) de couverture ouvrant est un élément, de préférence transparent ou translucide, positionné sur un flanc du tunnel, à mi chemin entre un élément (3) de couverture de faîte et un élément (4, 13) de couverture bas, dit élément latéral.

3. Abri (1) selon la revendication 1,
**caractérisé en ce qu'**il est prévu une pluralité d'éléments (5) de couverture ouvrant disposés alignés le long des flancs dudit tunnel.

4. Abri (1) selon la revendication 1,
**caractérisé en ce que** l'élément (5) de couverture ouvrant se présente sous forme d'un panneau déformable.

5. Abri (1) selon la revendication 4,
**caractérisé en ce que** le panneau constitutif de l'élément (5) de couverture ouvrant se déforme au voisinage de sa zone de liaison avec les arceaux (2) pour permettre le déplacement angulaire dans le sens de l'ouverture ou de la fermeture.

6. Abri (1) selon la revendication 1,
**caractérisé en ce que** l'élément (5) de couverture ouvrant est raccordé aux arceaux (2) par au moins une traverse (6) formant axe d'articulation

7. Abri (1) selon la revendication 1,
**caractérisé en ce que** chaque élément (5) de couverture ouvrant présente, à sa base, une rive (7) d'emboîtement sur le bord d'un élément de couverture contigu pour obtenir une immobilisation dudit élément (5) en position de fermeture, cette rive (7) étant désemboîtable du bord dudit élément (4, 13) de couverture contigu par déformation volontaire de l'élément (5) de couverture ouvrant, lors des phases manuelles d'ouverture et de fermeture, ou accidentelle sous l'effet d'une surpression à l'intérieur dudit abri (1).

8. Abri (1) selon la revendication 1,
**caractérisé en ce qu'**il est prévu, entre arceau (2) et élément (5) de couverture ouvrant, un moyen (8, 9) d'immobilisation dudit élément (5) dans une position angulaire prédéterminée.

9. Abri (1) selon la revendication 1,
**caractérisé en ce que** les arceaux (2) sont équipés, sur leurs flancs, d'au moins une gouttière (10) de récupération des eaux présentant une rive (11) d'appui d'un bord (5A) longitudinal de l'élément (5) de couverture ouvrant.

10. Abri (1) selon la revendication 9,
**caractérisé en ce que** les arceaux (2) sont équipés en outre d'au moins un rail (12) de guidage de l'élément (4) de couverture bas.
